# EUROPEAN PATENT SPECIFICATION

(11) **EP 3 722 225 B1**
(45) Date of publication and mention of the grant of the patent: **28.06.2023**
(21) Application number: 20172316.0
(22) Date of filing: 12.03.2019
(51) Int. Cl.: B65D 75/30, B65D 77/20

(54) **TRAY FOR PACKAGING FOOD PRODUCTS CONSTITUTED OF A FLAT SHEET OF MULTI-LAYER MATERIAL**
TRAY ZUR VERPACKUNG VON LEBENSMITTELN, DER AUS EINER FLACHES BLATT AUS MEHRSCHICHTENMATERIAL GEBILDET IST
PLATEAU D'EMBALLAGE DE PRODUITS ALIMENTAIRES CONSTITUÉ À PARTIR D'UNE FEUILLE PLATE EN MATÉRIAU MULTICOUCHE

(30) Priority: 19.03.2018 IT 201800003743
(43) Date of publication of application: 14.10.2020
(62) Divisional of application: 19162152.3
(73) Proprietor: G. Mondini SpA, 25033 Cologne (BS) (IT)
(72) Inventor: Mondini, Giovanni, 25033 Cologne (Brescia) (IT)
(74) Representative: Ponchiroli, Simone

(56) References cited:
- WO-A1-2011/012649
- WO-A1-2016/182831
- US-A- 2 874 836
- US-A- 3 255 880
- US-A- 3 483 964
- US-A1- 2009 250 466

## Description

This invention relates to a tray for packaging food products constituted of a flat sheet of multi-layer material as well as a pack which comprises that tray. For some years now a packaging technology has been known on the market, invented by the same Applicant, and marketed under the Slimfresh^{®} trademark, in which food products are packaged in packs constituted of only two elements, both flat (before packaging): a lower tray constituted of a flat sheet of multi-layer material, and an upper protective film.

The tray usually has a rectangular shape with rounded corners, and the flat sheet comprises a paper-based lower layer and a plastic material upper layer. The protective film is sealed to the upper layer of the tray along a ring-shaped connecting zone which surrounds the food product.

Examples of other packs (not invented by the same Applicant as above) are disclosed in WO 2016/182831 A1 and, even if not for packaging food products, in US 3,255,880 and in US 2,874,836.

This aim of this invention is to improve on this technology which, despite many advantages, also has some disadvantages if the user does not consume the entire food product in one go, but instead wants to preserve a part for later. In fact, the simplicity of the pack makes it relatively difficult to preserve the products contained in it in the best possible way between one use and the next, above all to protect them from the ambient air, therefore it may be necessary either to transfer the remaining food product to a different container or to cover the entire container with a protective film.

In this context the technical purpose of this invention is to provide a tray for packaging food products constituted of a flat sheet of multi-layer material, and a pack which comprises that tray, which overcome the above-mentioned disadvantages.

In particular, the technical purpose of this invention is to provide a tray for packaging food products, constituted of a flat sheet of multi-layer material, which allows a pack to be made, the pack making it possible to preserve part of the food product for later in a better way than is possible with the packs of this type already on sale.

A further technical purpose of this invention is to provide a tray for packaging food products constituted of a flat sheet of multi-layer material, which allows a pack to be made which is easy to use for the consumer.

The technical purpose and the aims indicated are substantially achieved by a tray for packaging food products constituted of a flat sheet of multi-layer material, and by a pack which comprises that tray, as described in the appended claims.

Further features and the advantages of this invention are more apparent in the detailed description, with reference to the accompanying drawings which illustrate several preferred, non-limiting embodiments of a tray for packaging food products constituted of a flat sheet of multi-layer material, and a pack which comprises that tray, in which:
- Figure 1 shows, in plan view, a tray made according to this invention, with a long dash and short dash line highlighting a protective film couplable to the tray;
- Figure 2 is an enlarged view of the detail II of Figure 1;
- Figure 3 is an enlarged view of the detail III of Figure 1;
- Figure 4 is an axonometric view of the tray of Figure 1 with one part bent;
- Figure 5 is an enlarged view of the detail V of Figure 4;
- Figure 6 shows the tray of Figure 1 highlighting zones for connecting to the protective film;
- Figure 7 shows an alternative embodiment of the tray of Figure 1; and
- Figure 8 is a side view in cross-section of an example of a sealing machine usable for constraining a protective film to the tray.

With reference to the above-mentioned figures the numeral 1 denotes in its entirety a tray for packaging food products according to this invention.

As already indicated, the tray 1 is constituted of a single flat sheet of multi-layer material which comprises at least one paper-based lower layer and one plastic material upper layer (which are not highlighted in the accompanying figures), and which has a perimetric edge 2. Optionally, there may also be further, intermediate layers.

Advantageously, the upper layer may be made of material transparent to visible light and the paper-based layer may be printed with various types of images and/or information.

In terms of shape, the flat sheet may adopt the shape best suited to the requirements. In the preferred embodiment illustrated in the accompanying figures it has a substantially rectangular shape with rounded corners. However, other shapes are possible (for example, oval, circular, square, rhomboid, etc.).

According to this invention, the tray 1 has an elongate cut 3 that extends near the perimetric edge 2 but remains spaced from it along its entire length. In the embodiments illustrated, the elongate cut 3 extends in particular between two ends 4 which are separate and spaced from one another and it advantageously extends for most of the extent of the perimetric edge 2 (that is to say, along more than half of the extent of the perimetric edge 2) but not along the entire perimetric edge 2.

The elongate cut 3 is shaped in such a way that between it and the perimetric edge 2 a portion of the flat sheet remains identified which defines a frame 5 that at least partly surrounds an inner part 6 of the flat sheet, the inner part 6 on which, in use, a food product is to be positioned. That result may be obtained by shaping the elongate cut 3 in such a way that it forms a concavity on the side facing the inner part 6 and a convexity on the side facing the outside of the tray 1.

Advantageously, in the preferred embodiments both the elongate cut 3 and the frame 5, in plan view, overall are U-shaped or C-shaped.

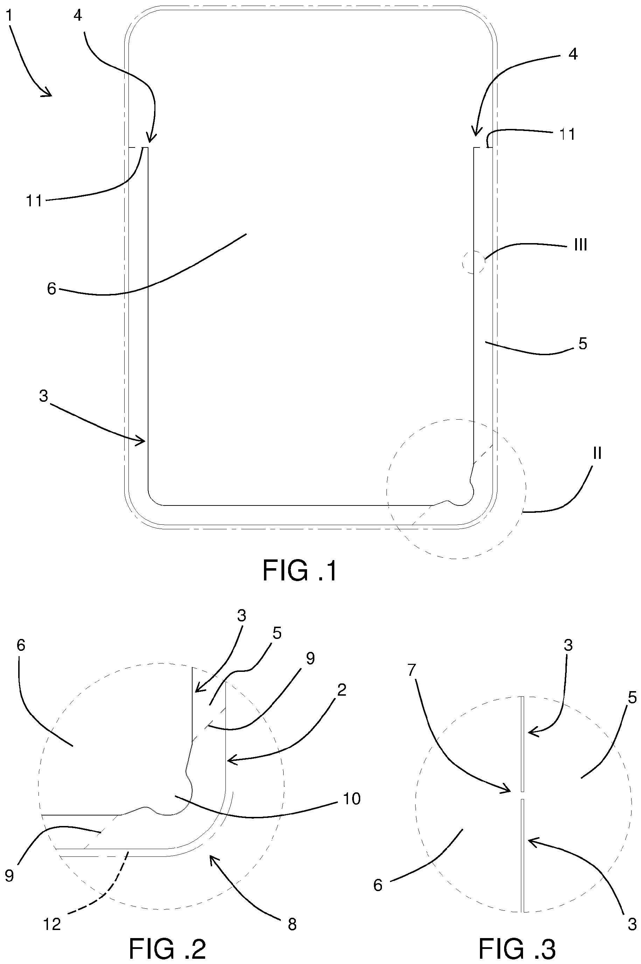

Preferably, in order to give the tray 1 stability at least before its use to make a pack, it is possible to ensure that there are one or more connecting points 7 present between the frame 5 and the inner part 6 of the flat sheet, at which the elongate cut 3 is interrupted for a short stretch (Figure 3). Those connecting points 7 are advantageously obtained by making the elongate cut 3 in stretches, with each stretch separated from the next by a connecting point 7, so that each connecting point is a sort of "protuberance" left while performing the cut. In any case, they are made in such a way as to constitute facilitated breaking zones, and for that purpose they have a length (measured as the distance between the two adjacent stretches of the elongate cut 3) which is small, usually around 1 mm or less.

In other embodiments which in any case comprise the presence of connecting points 7, suitable for keeping the frame 5 attached to the inner part 6 in the absence of external stresses, it may even be the case that both the elongate cut 3 and the frame 5 completely surround the inner part 6 of the flat sheet, that is to say, that the frame 5 is a single whole ring positioned around the inner part 6 and only connected to the inner part by the connecting points 7 (solution not illustrated).

According to a second innovative aspect of this invention, the frame 5 has at least one opening portion 8, intended to facilitate the opening of a pack which comprises the tray 1 according to this invention, as described in more detail below.

The opening portion 8 corresponds to a stretch of the frame 5 which is delimited, on two opposite sides, by two main preferential bending lines 9 which are made in the frame 5, and on the other two sides, respectively by the perimetric edge 2 and by the elongate cut 3 (however, the later side may not be present if the main preferential bending lines 9 meet at a single point of the elongate cut 3).

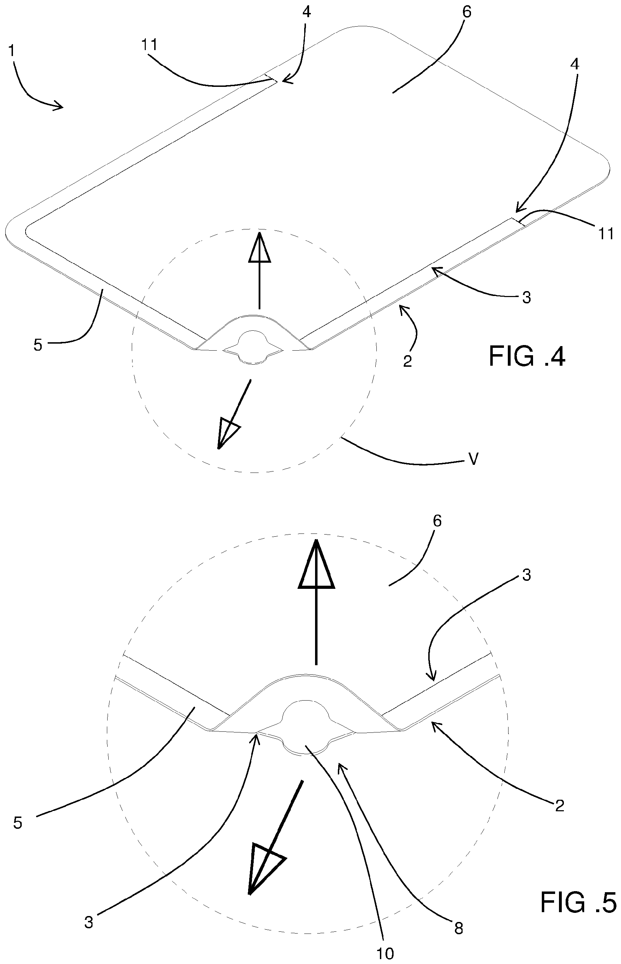

Each main preferential bending line 9 extends from the perimetric edge 2 to the elongate cut 3 and is advantageously constituted of a localised crushing of the flat sheet. Together, the two main preferential bending lines 9 allow bending of the opening portion 8 of the frame 5 relative to the rest of the flat sheet (Figures 4 and 5). Moreover, in order to facilitate the achievement of that result, the main preferential bending lines 9 are advantageously straight, and aligned with one another in such a way that one constitutes a continuation of the other along the same straight line.

With reference to a straight line which passes through the points at which the two main preferential bending lines 9 intersect the elongate cut 3, in the preferred embodiment the elongate cut 3 extends in such a way as to define a projection 10 of the inner part 6 of the flat sheet, which protrudes towards the perimetric edge 2, going beyond that straight line. In this way, when the opening portion 8 of the frame 5 is bent upwards (Figure 5) it is possible to use the protruding projection 10 to hold the inner part 6 of the flat sheet while opening the pack (this point will be described in more detail below).

The opening portion 8 is made at a linking zone between two further portions of the frame 5 which extend mainly along lines that are at an angle or perpendicular to each other. For example, the opening portion 8 may be made at the main corners of the flat sheet (Figure 1).

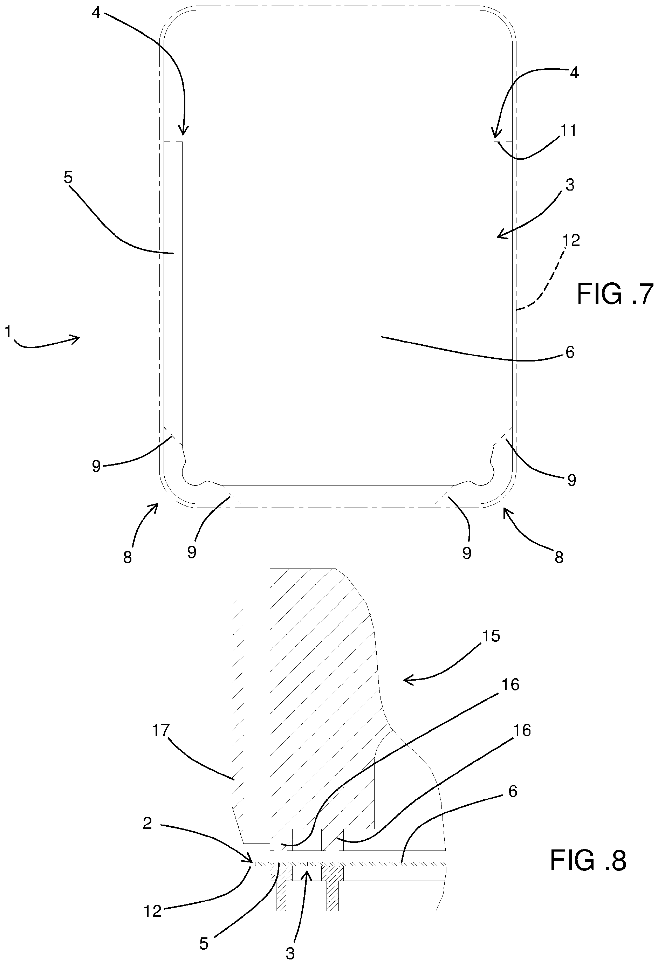

Even if in general one opening portion 8 may be sufficient, there are also embodiments in which the frame 5 has a plurality of opening portions 8, such as that in Figure 7.

In the preferred embodiment, in which the cut has two ends 4 which are separate and spaced from one another, it is also the case that the flat sheet has two secondary preferential bending lines 11, which each extend between one end 4 of the elongate cut 3 and the perimetric edge 2, and which have the function of allowing, in use, a bending of the whole frame 5 relative to the rest of the flat sheet. Advantageously, the secondary preferential bending lines 11 are also straight, and aligned with one another in such a way that one constitutes a continuation of the other along the same straight line.

As already indicated, it is disclosed a pack which uses the tray 1 described above together with a protective film 12 fixed to it, for containing a food product.

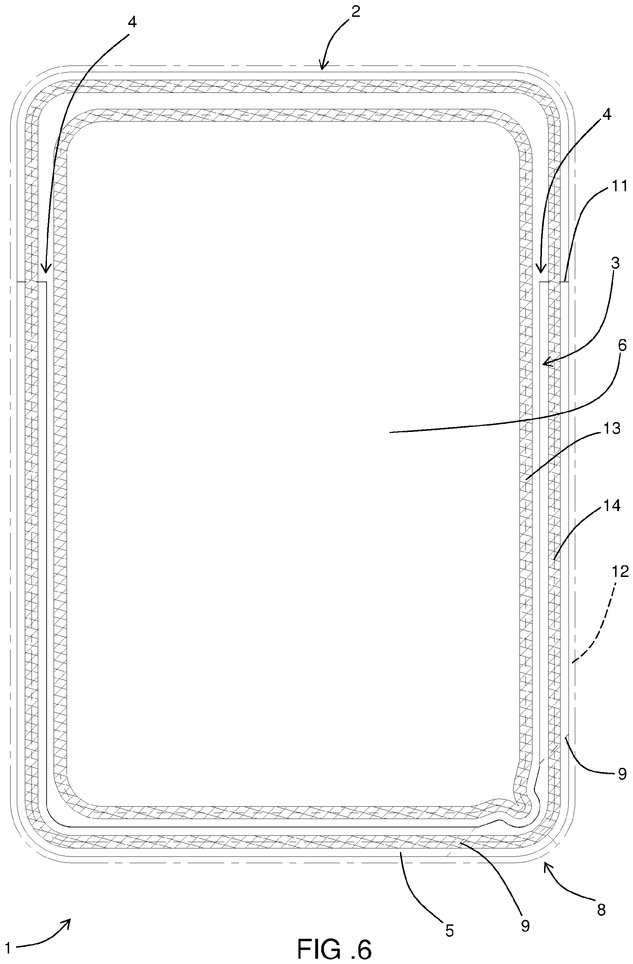

In this case, the food product will be positioned on the inner part 6 of the flat sheet and there will also be at least two separate connecting zones 13, 14 between the protective film 12 and the tray 1, a first connecting zone 13 that extends continuously on the inner part 6 of the flat sheet in a closed ring that surrounds the food product (that is to say, inside the frame 5), and a second connecting zone 14 that extends along the frame 5 externally relative to the first connecting zone 13. Advantageously, the second connecting zone 14 also extends continuously in a closed ring, which may be either external relative to the closed ring along which the first connecting zone 13 extends (Figure 6), or partly overlapping it (in the case in Figure 6, for example, the two connecting zones 13, 14 could overlap at the top part).

The first connecting zone 13 does not affect the protruding projection 10 defined by the elongate cut 3 which is therefore detached from the protective film 12.

Therefore, advantageously, the pack is made in such a way that it is reclosable, that is to say, in such a way that it can be partly closed again after the protective film 12 has been detached from the tray 1 at least at one part of the first connecting zone 13. In other words, at least at the first connecting zone 13 the protective film 12 is connected to the tray 1 in such a way that it can be detached and stuck down again (technical solution in itself known and therefore not described in detail).

Figure 8 shows a schematic example of a detail of a sealing machine 15 capable of simultaneously making the protective film 12 stick to the tray 1 at two connecting zones 13, 14 which are near but spaced from one another; for that purpose the machine has two sealing bodies 16 which are near but spaced from one another. The machine also has a blade 17 suitable for cutting a piece of protective film 12 from a continuous web.

Use of the pack described above is very simple.

In order to open it, the user first uses his or her fingers to grip the opening portion 8 of the frame 5 and the protective film 12 connected to it and bends them upwards relative to the rest of the flat sheet (as in Figure 5). At this point, if the protruding projection 10 is present, with his or her other hand the user can grip the protruding projection 10 which has been freed below the portion of protective film 12 which has been bent upwards. Firmly holding the opening portion 8 and the protective film 12 fixed to it with one hand, and the protruding projection 10 with the other hand, the user can then apply the force necessary to gradually cause both bending of the whole frame 5 upwards, and separation of the protective film 12 from the tray 1 at the first connecting zone 13. Once the pack has been opened enough to gain access to the food product, the user can take out the quantity of it that is required. If not all of the food product is used, with an inverse movement relative to that described, the user can return the frame 5 to the same plane as the rest of flat sheet, then simply apply gentle pressure on the protective film 12 at the first connecting zone 13 so as to stick down the protective film 12 on the tray 1 again, sufficiently reclosing the pack for guaranteeing good preservation of the food product.

This invention brings important advantages.

Thanks to this invention it has been possible to make a tray of the type constituted of a flat sheet of multi-layer material which allows a pack to be made with which, compared to the prior art trays, it is possible to obtain better preservation of the food products between two uses at different times.

The tray according to this invention also allows a pack to be made which is extremely easy to use.

Finally, it should be noticed that this invention is relatively easy to produce and that even the cost linked to implementing the invention is not very high.

## Claims

1. A tray for packaging food products constituted of a flat sheet of multi-layer material, wherein:
the flat sheet comprises at least one lower layer and one plastic material upper layer and has a perimetric edge (2);
the tray (1) has an elongate cut (3) that extends near the perimetric edge (2) and spaced from it;
between the elongate cut (3) and the perimetric edge (2) a portion of the flat sheet is identified which defines a frame (5) that at least partly surrounds an inner part (6) of the flat sheet on which, in use, a food product is to be positioned;
wherein two portions of the frame (5) extend mainly along lines that are at an angle or perpendicular to each other, and a linking zone is between the two portions,
the frame (5) having at least an opening portion (8) that is made at at the linking zone;
said tray being **characterised in that**
the lower layer is paper-based;
and **in that** the at least one opening portion (8) is delimited on two opposite sides by two main preferential bending lines (9) which are made in the frame (5);
wherein each main preferential bending line (9) extends from the perimetric edge (2) to the elongate cut (3) and the main preferential bending lines (9) allow a bending of the opening portion (8) of the frame (5) relative to the rest of the flat sheet;
and **in that**, at the opening portion (8) of the frame (5), the elongate cut (3) delimits a protruding projection (10) of the inner part (6) of the flat sheet, which protrudes towards the perimetric edge (2), relative to a straight line that passes through two points at which the two main preferential bending lines (9) intersect the elongate cut (3).

2. The tray according to claim 1, wherein the two main preferential bending lines (9) extend along the same straight line.

3. The tray according to claim 1 or 2, wherein the frame (5) has a plurality of opening portions (8).

4. The tray according any of claims 1 to 3, wherein the elongate cut (3) extends for most of the extent of the perimetric edge (2).

5. The tray according to any of claims 1 to 4, wherein the elongate cut (3) and the frame (5), in plan view, are each overall U-shaped or C-shaped.

6. The tray according to any of claims 1 to 5, wherein the flat sheet also has two secondary preferential bending lines (11), which each extend between one end (4) of the elongate cut (3) and the perimetric edge (2), for allowing, in use, a bending of the whole frame (5) relative to the rest of the flat sheet.

7. The tray according to any of claims 1 to 6, wherein there are one or more connecting points (7) present between the frame (5) and the inner part (6) of the flat sheet, at which the elongate cut (3) is interrupted, said connecting points (7) constituting facilitated breaking zones.

8. The tray according to any of claims 1 to 3, wherein there are connecting points (7) present between the frame (5) and the inner part (6) of the flat sheet, at which the elongate cut (3) is interrupted, said connecting points (7) constituting facilitated breaking zones,
wherein both the elongate cut (3) and the frame (5) completely surround the inner part (6) of the flat sheet, so that the frame (5) is a single whole ring positioned around the inner part (6) and only connected to the inner part by the connecting points (7), the connecting points (7) being suitable for keeping the frame (5) attached to the inner part (6) in the absence of external stresses.

9. The tray according to any of claims 1 to 8, wherein the opening portion (8) corresponds to a stretch of the frame (5) which is delimited, on two opposite sides, by the two main preferential bending lines (9) and, on the other two sides, respectively by the perimetric edge (2) and by the elongate cut (3).

10. The tray according to any of claims 1 to 9, wherein each main preferential bending line (9) is constituted of a localised crushing of the flat sheet.

## Patentansprüche

1. Ein Tray zum Verpacken von Lebensmitteln, bestehend aus einer flachen Platte eines mehrschichtigen Materials, wobei:
die flache Platte mindestens eine untere Schicht und eine obere Schicht aus Kunststoff beinhaltet und einen Außenrand (2) hat;
das Tray (1) einen länglichen Schnitt (3) hat, der sich in der Nähe des Außenrands (2) und in einem Abstand davon erstreckt;
zwischen dem länglichen Schnitt (3) und dem Außenrand (2) ein Abschnitt der flachen Platte gekennzeichnet ist, der einen Rahmen (5) definiert, der zumindest teilweise einen inneren Teil (6) der flachen Platte umringt, auf dem im Gebrauch ein Lebensmittelprodukt zu platzieren ist;
wobei sich zwei Abschnitte des Rahmens (5) hauptsächlich auf Linien erstrecken, die in einem Winkel oder lotrecht zueinander stehen, und sich zwischen den zwei Abschnitten ein Verbindungsbereich befindet,
der Rahmen (5) dabei mindestens einen Öffnungsabschnitt (8) hat, der in dem Verbindungsbereich hergestellt ist;
besagtes Tray ist dabei **dadurch gekennzeichnet, dass**
die untere Schicht auf Papierbasis ist;
und darin, dass der mindestens eine Öffnungsabschnitt (8) an zwei gegenüberliegenden Seiten durch zwei Haupt-Sollbiegelinien (9) eingegrenzt ist, die in dem Rahmen (5) hergestellt sind;
wobei sich jede Haupt-Sollbiegelinie (9) vom Außenrand (2) zum länglichen Schnitt (3) erstreckt und die Haupt-Sollbiegelinien (9) ein Biegen des Öffnungsabschnitts (8) des Rahmens (5) im Verhältnis zum Rest der flachen Platte erlauben;
und darin, dass am Öffnungsabschnitt (8) des Rahmens (5) der längliche Schnitt (3) einen hervorstehenden Vorsprung (10) des inneren Teils (6) der flachen Platte begrenzt, der in Richtung des Außenrands (2) hervorsteht, im Verhältnis zu einer geraden Linie, die durch zwei Punkte verläuft, an denen die zwei Haupt-Sollbiegelinien (9) den länglichen Schnitt (3) schneiden.

2. Das Tray nach dem Patentanspruch 1, wobei sich die zwei Haupt-Sollbiegelinien (9) auf derselben geraden Linie erstrecken.

3. Das Tray nach dem Patentanspruch 1 oder 2, wobei der Rahmen (5) eine Mehrzahl von Öffnungsabschnitten (8) hat.

4. Das Tray nach jedem der Patentansprüche 1 bis 3, wobei sich der längliche Schnitt (3) über den Großteil des Ausmaßes des Außenrands (2) erstreckt.

5. Das Tray nach jedem der Patentansprüche 1 bis 4, wobei der längliche Schnitt (3) und der Rahmen (5) in der Draufsicht beide allgemein U-förmig oder C-förmig sind.

6. Das Tray nach jedem der Patentansprüche 1 bis 5, wobei die flache Platte auch zwei sekundäre Sollbiegelinien (11) hat, die sich beide zwischen einem Ende (4) des länglichen Schnitts (3) und dem Außenrand (2) erstrecken, um im Gebrauch ein Biegen des gesamten Rahmens (5) im Verhältnis zum Rest der flachen Platte zu erlauben.

7. Das Tray nach jedem der Patentansprüche 1 bis 6, wobei ein oder mehr Verbindungspunkte (7) zwischen dem Rahmen (5) und dem inneren Teil (6) der flachen Platte vorhanden sind, an denen der längliche Schnitt (3) unterbrochen ist, besagte Verbindungspunkte (7) stellen dabei erleichterte Bruchbereiche dar.

8. Das Tray nach jedem der Patentansprüche 1 bis 3, wobei Verbindungspunkte (7) zwischen dem Rahmen (5) und dem inneren Teil (6) der flachen Platte vorhanden sind, an denen der längliche Schnitt (3) unterbrochen ist, besagte Verbindungspunkte (7) stellen dabei erleichterte Bruchbereiche dar,
wobei sowohl der längliche Schnitt (3) als auch der Rahmen (5) den inneren Teil (6) der flachen Platte komplett umrunden, so dass der Rahmen (5) ein einziger, ganzer Ring ist, der um den inneren Teil (6) herum positioniert ist und mit dem inneren Teil nur durch die Verbindungspunkte (7) verbunden ist, die Verbindungspunkte (7) eignen sich dabei dazu, den Rahmen (5) am inneren Teil (6) befestigt zu halten, wenn keine Belastungen von außen vorliegen.

9. Das Tray nach jedem der Patentansprüche 1 bis 8, wobei der Öffnungsabschnitt (8) einer Strecke des Rahmens (5) entspricht, der an zwei einander gegenüber liegenden Seiten von den zwei Haupt-Sollbiegelinien (9) begrenzt ist und an den anderen zwei Seiten vom Außenrand (2) beziehungsweise vom länglichen Schnitt (3).

10. Das Tray nach jedem der Patentansprüche 1 bis 9, wobei jede Haupt-Sollbiegelinie (9) aus dem lokalisierten Zusammendrücken der flachen Platte besteht.

## Revendications

1. Un plateau pour l'emballage de produits alimentaires constitué d'une feuille plate de matériau multicouche, dans lequel :
la feuille plate comprend au moins une couche inférieure et une couche supérieure de matière plastique et présente un bord périmétrique (2) ;
le plateau (1) a une coupe allongée (3) qui s'étend à proximité du bord périmétrique (2) et espacée de celui-ci ;
entre la coupe allongée (3) et le bord périmétrique (2) une portion de la feuille plate est identifiée qui définit un cadre (5) qui entoure au moins partiellement une partie intérieure (6) de la feuille plate sur laquelle, lors de l'utilisation, un produit alimentaire doit être positionné ;
dans lequel deux portions du cadre (5) s'étendent principalement le long de lignes qui sont inclinées ou perpendiculaires entre elles, et une zone de raccord est présente entre les deux portions, le cadre (5) ayant au moins une portion d'ouverture (8) qui est réalisée au niveau de la zone de raccord ;
ledit plateau étant **caractérisé en ce que** la couche inférieure est à base de papier ;
et **en ce que** ladite au moins une portion d'ouverture (8) est délimitée sur deux côtés opposés par deux lignes principales de pliage préférentiel (9) qui sont réalisées dans le cadre (5) ;
dans lequel chaque ligne principale de pliage préférentiel (9) s'étend du bord périmétrique (2) à la coupe allongée (3) et les lignes principales de pliage préférentiel (9) permettent une flexion de la portion d'ouverture (8) du cadre (5) par rapport au reste de la feuille plate ;
et **en ce que**, au niveau de la portion d'ouverture (8) du cadre (5), la coupe allongée (3) délimite un appendice en saillie (10) de la partie intérieure (6) de la feuille plate, qui se projette vers le bord périmétrique (2), par rapport à une droite qui passe par deux points au niveau desquels les deux lignes principales de pliage préférentiel (9) coupent la coupe allongée (3).

2. Le plateau selon la revendication 1, dans lequel les deux lignes principales de pliage préférentiel (9) s'étendent le long de la même droite.

3. Le plateau selon la revendication 1 ou 2, dans lequel le cadre (5) a une pluralité de portions d'ouverture (8).

4. Le plateau selon l'une quelconque des revendications de 1 à 3, dans lequel la coupe allongée (3) s'étend sur la majeure partie de l'extension du bord périmétrique (2).

5. Le plateau selon l'une quelconque des revendications de 1 à 4, dans lequel la coupe allongée (3) et le cadre (5), dans une vue en plan, ont chacun globalement une forme en « U » ou en « C ».

6. Le plateau selon l'une quelconque des revendications de 1 à 5, dans lequel la feuille plate présente également deux lignes secondaires de pliage préférentiel (11), qui s'étendent, chacune, entre une extrémité (4) de la coupe allongée (3) et le bord périmétrique (2), pour permettre, lors de l'utilisation, une flexion de tout le cadre (5) par rapport au reste de la feuille plate.

7. Le plateau selon l'une quelconque des revendications de 1 à 6, dans lequel il y a un ou plusieurs points de raccordement (7) présents entre le cadre (5) et la partie intérieure (6) de la feuille plate, au niveau desquels la coupe allongée (3) est interrompue, lesdits points de raccordement (7) constituant des zones de rupture facilitée.

8. Le plateau selon l'une quelconque des revendications de 1 à 3, dans lequel il y a des points de raccordement (7) présents entre le cadre (5) et la partie intérieure (6) de la feuille plate, au niveau desquels la coupe allongée (3) est interrompue, lesdits points de raccordement (7) constituant des zones de rupture facilitée,
dans lequel la coupe allongée (3) et le cadre (5) entourent tous deux complètement la partie intérieure (6) de la feuille plate, de sorte que le cadre (5) est un anneau entier unique positionné autour de la partie intérieure (6) et uniquement raccordé à la partie intérieure par les points de raccordement (7), les points de raccordement (7) étant destinés à maintenir le cadre (5) attaché à la partie intérieure (6) en l'absence de sollicitations extérieures.

9. Le plateau selon l'une quelconque des revendications de 1 à 8, dans lequel la portion d'ouverture (8) correspond à un tronçon du cadre (5) qui est délimité, sur deux côtés opposés, par les deux lignes principales de pliage préférentiel (9) et, sur les deux autres côtés, respectivement par le bord périmétrique (2) et par la coupe allongée (3).

10. Le plateau selon l'une quelconque des revendications de 1 à 9, dans lequel chaque ligne principale de pliage préférentiel (9) est constituée d'un écrasement localisé de la feuille plate.
